# EUROPÄISCHE PATENTANMELDUNG

(11) **EP 3 471 225 A1**
(43) Veröffentlichungstag der Anmeldung: **17.04.2019**
(21) Anmeldenummer: 17196499.2
(22) Anmeldetag: 14.10.2017
(51) Int. Cl.: H02G 3/06

(54) **KABELVERSCHRAUBUNG**

(71) Anmelder: Lapp Engineering & Co., 6330 Cham (CH)
(72) Erfinder: DROTLEFF, Rolf, 75932 Deckenpfron (DE); JURAK, Marek, 76001 Zlin (CZ)
(74) Vertreter: Rutz & Partner

(57) **Zusammenfassung**

Die Kabelverschraubung (1), die der Durchführung eines Kabels durch eine Montageöffnung (90) in einer Montagewand (9), insbesondere einer Gehäusewand eines elektrischen Geräts oder eines elektrischen Schranks, dient, umfasst einen hohlzylinderförmigen Montagestutzen (5),
- der einen der Durchführung des Kabels (8) dienenden Stutzenkanal (40) umfasst,
- der eine gegebenenfalls drehbare Schlüsselfläche (43), zum Anlegen eines Werkzeugs, umfasst,
- der wenigstens ein erstes Aussengewinde (41) aufweist, mittels dessen eine Hutmutter (2), die eine der Durchführung des Kabels dienende Durchführungsöffnung (20) aufweist, gehalten ist, und
- der in dem der Hutmutter (2) zugewandten Endbereich eine vorzugsweise konische Abstützfläche (44) aufweist, an der eine erste Druckfläche (33) eines Dichtungsteils (3) anliegt, das einen zur Durchführung des Kabels (8) dienenden Aufnahmekanal (30) aufweist und das eine der Hutmutter (2) zugewandte zweite Druckfläche (33) aufweist.

Erfindungsgemäss weist das Dichtungsteil (3) einen Dichtabschnitt (38) und einen Beaufschlagabschnitt (39) auf, wobei der Dichtabschnitt (38) und der Beaufschlagabschnitt (39) aus unterschiedlichen Materialien gefertigt sind.

## Beschreibung

Die Erfindung betrifft eine Kabelverschraubung zur Durchführung eines Kabels durch eine Montageöffnung in einer Montagewand.

Kabelverschraubungen werden dazu genutzt, Kabel durch Wände und Gehäuse von elektrischen Schaltschränken, elektrischen Geräten und dergleichen hindurchzuführen. Zweck der Kabelverschraubung ist die Vermeidung von Beschädigungen des Kabels im Bereich der Durchführung sowie die zug- und druckfeste Befestigung des Kabels bezüglich der Montagewand.

Aus der EP0551664A1 ist eine Kabelverschraubung mit einem in einem Gehäuse angeordneten Lamellenkorb bekannt. Der Lamellenkorb ist durch eine Hutmutter, welche auf das Gehäuse aufschraubbar ist, beaufschlagbar, so dass die Lamellen des Lamellenkorbs einen Dichtring gegen ein durchgeführtes Kabel pressen. Nachteilig an dieser Lösung ist, dass die Lamellen aufgrund ihrer feinen Struktur abbrechen können. Ferner ist die Stabilität der Führung des Kabels durch die Kabelverschraubung limitiert, insbesondere Kippbewegungen des Kabels bezüglich der Kabelverschraubung können zu einer eingeschränkten Dichtigkeit der Durchführung führen.

Aus der EP2107657A2 ist eine Kabelverschraubung mit zwei sich in entgegengesetzte Richtungen erstreckenden Lamellenkörben bekannt. In jedem Lamellenkorb sitzt ein elastischer Dichtring, der durch den jeweiligen Lamellenkorb radial zur Mittelachse in Richtung des durchgeführten Kabels beaufschlagbar ist. Nachteilig an dieser Lösung ist die komplexe Struktur des doppelten Lamellenkorbs, was zu einem hohen Fertigungsaufwand führt. Zudem können die Lamellen aufgrund ihrer feinen Struktur abbrechen.

Aus der DE202012012427U1 ist eine Kabelverschraubung mit einem Dichteinsatz bekannt, welcher durch eine auf dem Grundkörper aufschraubbare Druckschraube beaufschlagbar ist. Der Dichteinsatz ist drehbar im Grundkörper gelagert, so dass es beim Beaufschlagen des durchgeführten Kabels mit dem Dichteinsatz zu einem Verdrillen des Kabels kommen kann. Zudem ist die Beaufschlagung des Dichteinsatzes und die daraus folgende Beaufschlagung des Kabels nicht homogen, weshalb eine mangelhafte und gegebenenfalls undichte Verbindung resultieren kann.

Ferner ist zu beachten, dass bei intensiver Nutzung der Kabelverschraubungen, die gegebenenfalls der Witterung, Wasser und Schmutz ausgesetzt sind, Verschleisserscheinungen auftreten können. Ebenso kann die Kabelverschraubung, insbesondere nach längerem Gebrauch, oft nur mit entsprechend grossem Kraftaufwand bedient werden.

Der Erfindung liegt daher die Aufgabe zu Grunde, eine verbesserte Kabelverschraubung zu schaffen.

Die Kabelverschraubung soll auch nach längerer Nutzung und mehrfachem Öffnen und Schliessen leicht bedient werden können und kaum Verschleisserscheinungen aufweisen.

Ferner ist eine Kabelverschraubung bereitzustellen, die eine zuverlässige mechanische und vorzugsweise dicht abschliessende Verbindung ermöglicht. Insbesondere soll eine möglichst gleichmässige radiale und longitudinale Klemmung eines durchgeführten Kabels ermöglicht werden.

Ferner ist eine Kabelverschraubung bereitzustellen, die eine Verdrillung des durchgeführten Kabels während der Installation vermindert oder gänzlich verunmöglicht.

Zudem soll die Kabelverschraubung für unterschiedliche Kabeldurchmesser geeignet sein und unabhängig vom Kabeldurchmesser eine dichte Durchführung eines Kabels durch eine Trennwand ermöglichen.

Diese Aufgabe wird mit einer Kabelverschraubung gelöst, welche die in Anspruch 1 angegebenen Merkmale aufweist. Vorteilhafte Ausgestaltungen der Erfindung sind in weiteren Ansprüchen angegeben.

Die Kabelverschraubung, die der Durchführung eines Kabels durch eine Montageöffnung in einer Montagewand, insbesondere einer Gehäusewand eines elektrischen Geräts oder eines elektrischen Schranks, dient, umfasst einen hohlzylinderförmigen Montagestutzen,
- der einen der Durchführung des Kabels dienenden Stutzenkanal umfasst,
- der eine Schlüsselfläche zum Anlegen eines Werkzeugs umfasst,
- der wenigstens ein erstes Aussengewinde aufweist, mittels dessen eine Hutmutter, die eine der Durchführung des Kabels dienende Durchführungsöffnung aufweist, gehalten ist, und
- der in dem der Hutmutter zugewandten Endbereich eine vorzugsweise konische Abstützfläche aufweist, an der eine erste Druckfläche eines Dichtungsteils anliegt, das einen zur Durchführung des Kabels dienenden Aufnahmekanal aufweist und das eine der Hutmutter zugewandte zweite Druckfläche aufweist.

Erfindungsgemäss ist das Dichtungsteil aus einem Dichtabschnitt und wenigstens einem Beaufschlagabschnitt geformt, wobei Dichtabschnitt und der Beaufschlagabschnitt aus unterschiedlichen Materialien gefertigt sind. Durch die Verwendung unterschiedlicher Materialien kann die mechanische Beaufschlagung durch die Hutmutter, wofür ein härteres Material optimal ist, unabhängig von der Abdichtung zum durchgeführten Kabel, wofür ein weicheres Material optimal ist, optimiert werden. Zudem wird ein Verdrehen des Dichtungsteils und des Montagestutzens nach Durchführung eines Kabels während des Verschraubens der Hutmutter verhindert oder zumindest stark reduziert. Ein Verdrillen des Kabels während des Verschraubvorgangs wird somit verhindert oder zumindest stark reduziert, so dass das Kabel bzw. der Kabelmantel nicht lokal geschädigt wird.

Der Montagestutzen weist in einer besonders bevorzugten Ausgestaltung ein zweites Aussengewinde auf, mit welchem die Kabelverschraubung in einem Gewinde in einer Montagewand festschraubbar ist. Gegebenenfalls kann auch ein hinter der Montagewand angeordneter Montagering mit einem Innengewinde mit dem Montagestutzen verschraubt werden. In einer weiteren erfindungsgemässen Ausgestaltung sind am Montagestutzen Schnellverriegelungselemente, insbesondere Schnappelemente, zur Festlegung der Kabelverschraubung an einer Montagewand, angeordnet. Die Schnellverriegelungselemente hintergreifen zumindest teilweise die Montagewand und stellen eine mechanisch stabile Festlegung der Kabelverschraubung an der Montagewand sicher.

In einer besonders bevorzugten Ausgestaltung wird das Dichtungsteil mit dem Dichtabschnitt und dem wenigstens einen Beaufschlagabschnitt durch Mehrkomponenten-Spritzgiessen, vorzugsweise durch Zweikomponenten-Spritzgiessen, und/oder durch Verpressen gemeinsam hergestellt. Auf diese Weise kann das Dichtungsteil mit dem Dichtabschnitt und dem wenigstens einen Beaufschlagabschnitt effizient in einem Herstellungsschritt gefertigt werden, was zeit- und kostenoptimiert ist. Zudem wird eine stoffschlüssige Verbindung der wenigstens zwei Elemente des Dichtungsteils erzielt.

Sofern der Dichtabschnitt und/oder der wenigstens eine Beaufschlagabschnitt kompliziertere Formen aufweisen sollen, so können diese auch vereinzelt durch Spritzgiessen und/oder durch Verpressen vereinzelt hergestellt werden.

Die Materialien für den Dichtabschnitt und für den wenigstens einen Beaufschlagabschnitt weisen vorzugsweise unterschiedliche Materialhärten auf. Besonders bevorzugt ist die Materialhärte des wenigstens einen Beaufschlagabschnitts höher als jene des Dichtabschnitts. Hierdurch wird eine gute mechanische Beaufschlagung des Beaufschlagabschnitts durch die Hutmutter ermöglicht. Der härtere Beaufschlagabschnitt wird bei Drehung der Hutmutter mechanisch daher weniger beansprucht, weshalb auch nach intensiver Benutzung kaum Verschleisserscheinungen auftreten. Gleichzeitig weist der Beaufschlagabschnitt bessere Gleiteigenschaften auf, sodass wiederum ein reduzierter Abrieb und ein reduzierter Widerstand bei Drehung der Hutmutter resultiert. Die Kabelverschraubung kann daher auch leichter bedient werden.

In bevorzugten Ausgestaltungen der erfindungsgemässen Kabelverschraubung sind der Dichtabschnitt und/oder der wenigstens eine Beaufschlagabschnitt aus Gummi, aus einem thermoplastischen Elastomer, aus Silikon oder einer Kombination hiervon gefertigt.

Der Dichtabschnitt und der wenigstens eine Beaufschlagabschnitt liegen vorzugsweise zumindest teilweise formschlüssig aneinander an und sind kraftschlüssig oder formschlüssig miteinander verbunden. Dabei kann vorzugsweise eine formschlüssige Verbindung vorgesehen werden, die bewirkt, dass der Dichtabschnitt und der wenigstens eine Beaufschlagabschnitt nur durch Kraftaufwand voneinander gelöst werden können, und die jedoch erlaubt, dass der Beaufschlagabschnitt gegenüber dem Dichtabschnitt gedreht werden kann. Der Dichtabschnitt und der Beaufschlagabschnitt können daher vorteilhaft aneinander anliegende Gleitflächen aufweisen. Auf diese Weise wird bewirkt, dass der Dichtabschnitt hinsichtlich Torsion vom Beaufschlagabschnitt entkoppelt ist und nur in axialer Richtung belastet wird.

Das Dichtungsteil kann daher zusätzlich zur ersten und zweiten Druckfläche eine dritte und vierte Druckfläche aufweisen, die aneinander anliegen.

Der Dichtabschnitt und der wenigstens eine Beaufschlagabschnitt können auf verschiedene Weise, lose, kraftschlüssig oder formschlüssig miteinander verbunden werden. Bei einer formschlüssigen Verbindung wird vorzugsweise vorgesehen, dass der wenigstens eine Beaufschlagabschnitt um die Längsachse der Kabelverschraubung gegenüber dem Dichtabschnitt drehbar, vom Dichtabschnitt jedoch nur mit Kraftaufwand lösbar ist.

Der Dichtabschnitt und der wenigstens eine Beaufschlagabschnitt
a) werden vorzugsweise durch Verleimen miteinander verbunden sind; oder
b) weisen zueinander korrespondierende Gewindeelemente auf, die miteinander verschraubt oder verschraubbar sind; oder
c) weisen Verbindungselemente, wie Rastelemente auf und sind formschlüssig miteinander verbunden, gegebenenfalls miteinander verrastet und/oder gegebenenfalls um die Längsachse der Kabelverschraubung gegeneinander drehbar.

Beispielsweise weisen der Dichtabschnitt und der wenigstens eine Beaufschlagabschnitt ringförmig verlaufende Rastelemente, wie Ringnuten und Ringe oder ringförmige Wölbungen auf, die vorzugsweise in einer Ebene liegen, die von der Längsachse der Kabelverschraubung senkrecht durchstossen wird.

Die zweite Druckfläche ist durch die Hutmutter beaufschlagbar. Durch Aufschrauben der Hutmutter auf das erste Aussengewinde am Montagestutzen wird der Beaufschlagabschnitt, bzw. das Dichtungsteil, auf der zweiten Druckfläche mechanisch beaufschlagt. Da die erste Druckfläche auf der Abstützfläche des Montagestutzens anliegt, führt die mechanische Beaufschlagung zu einer Deformierung des Dichtungsteils, wobei die Innenfläche des Dichtungsteils, bzw. der Dichtabschnitt, gegen die Kabelaussenfläche des durchgeführten Kabels gepresst wird.

In einer besonders bevorzugten Ausgestaltung weist die Innenfläche des Dichtungsteils zumindest ein, vorzugsweise mehrere, Anpresselemente auf, die radial oder ringförmig verlaufen. Die Anpresselemente verbessern die Anpressung der Innenfläche des Dichtungsteils gegen die Kabelaussenfläche. Durch die Anpresselemente entstehen auf der Innenfläche des Dichtungsteils feinere Strukturen als bei einer planaren Innenfläche. Diese feineren Strukturen weisen eine höhere Elastizität auf und können sich so besser an die Kabelaussenfläche des durchgeführten Kabels anpassen und eine gas- und flüssigkeitsdichte Verbindung eingehen. Die Anpresselemente erlauben es daher, Kabel mit unterschiedlichem Kabeldurchmesser dicht abschliessend zu halten. Die vorzugsweise elastischen Anpresselemente können dabei deformiert und/oder komprimiert werden.

In einer weiteren bevorzugten Ausgestaltung ist das Volumen des Dichtabschnitts grösser als das Volumen des Beaufschlagabschnitts. Hierdurch bleibt die Elastizität das Dichtungsteil hoch, so dass eine optimale Anpassung an das durchgeführte Kabel möglich bleibt. In einer besonders bevorzugten Ausgestaltung ist das Volumen des Beaufschlagabschnitts maximal 45%, vorzugsweise maximal 40%, vorteilhaft auch 20%-30%, des Volumens des Dichtungsteils.

Die Hutmutter weist vorzugsweise eine konische Innenfläche auf, die geometrisch komplementär zur zweiten Druckfläche des Dichtungsteils ausgestaltet ist. Hierdurch wird die mechanische Beaufschlagung des Dichtungsteils bzw. des Beaufschlagabschnitts verbessert und erfolgt gleichförmiger über die gesamte zweite Druckfläche.

In einer besonders bevorzugten Ausgestaltung ist die konische Innenfläche der Hutmutter und/oder das Dichtungsteil, bzw. der Beaufschlagabschnitt des Dichtungsteils, mit einer reibungsmindernden Beschichtung überzogen. Hierdurch wird das reibungsarme Gleiten der konischen Innenfläche der Hutmutter auf der zweiten Druckfläche erhöht, so dass sich das Dichtungsteil während des Verschraubvorgangs, bei dem vorzugsweise die Hutmutter um die Längsachse der Kabelverschraubung gedreht wird, nicht dreht.

Das Dichtungsteil weist in einer besonders bevorzugten Ausgestaltung zumindest zwei oder mehrere Aufnahmekanäle zur Durchführung je eines Kabels auf. Mehrere Kabel können somit mit einer einzigen Kabelverschraubung gas- und flüssigkeitsdicht durch eine Montagewand durchgeführt werden. Die Aufnahmekanäle weisen identische oder unterschiedliche Durchmesser und Formen auf, so dass Kabel mit unterschiedlichen Durchmessern und Querschnitten durchführbar sind.

In einer weiteren bevorzugten Ausgestaltung weist das Dichtungsteil einen oder mehrere Aufnahmekanäle auf, in denen die Anpresselemente in Form eines Gewindes vorgesehen sind, welches erlaubt, vorzugsweise mit einem Aussengewinde versehene Dichtungszapfen aufzunehmen, durch die der nicht genutzte Aufnahmekanal verschlossen wird. Der oder die Dichtungszapfen können daher bedarfsweise entfernt werden, um bei Bedarf ein Kabel durch die Kabelverschraubung hindurch zu führen.

Erfindungsgemässe Kabelverschraubungen können daher prophylaktisch, hinsichtlich einer zukünftigen Verwendung bzw. Kabeldurchführung z.B. an einer Wand vormontiert werden, die weiterhin dicht abgeschlossen ist.

Das erfindungsgemässe Dichtungsteil kann auch aus wenigstens drei Teilen gefertigt werden. Z.B. wird an einem Ende des Dichtabschnitts ein der Hutmutter zugewandter erster Beaufschlagabschnitt und am anderen Ende des Dichtabschnitts ein dem Montagestutzen zugewandter zweiter Beaufschlagabschnitt vorgesehen. Der zweite Beaufschlagabschnitt kann anders oder in gleicher Weise, lose, kraftschlüssig oder formschlüssig, vorzugsweise um die Längsachse der Kabelverschraubung drehbar, mit dem Dichtabschnitt verbunden werden, wie der erste Beaufschlagabschnitt. Die genannten Verwendungsmöglichkeiten können für den ersten Beaufschlagabschnitt und den zweiten Beaufschlagabschnitt somit frei gewählt und miteinander kombiniert werden. Die beiden Beaufschlagabschnitte können dabei ideal an die Hutmutter bzw. den Montagestutzen angepasst werden. Der Dichtungsabschnitt hingegen kann für seine Dichtungsfunktion optimiert werden. Vorzugsweise sind beide Beaufschlagabschnitte je aus gleichem oder unterschiedlichem härterem Material gefertigt als der Dichtabschnitt, welches aus einem weicheren Material gefertigt ist.

In einer besonders bevorzugten Ausgestaltung ist der an der Hutmutter anliegende erste Beaufschlagabschnitt aus einem härteren Material gefertigt, als der zweite Beaufschlagabschnitt, welcher wiederum härter ausgebildet ist als der Dichtabschnitt.

Nachfolgend wird die Erfindung anhand von Zeichnungen näher erläutert. Dabei zeigt:
- Fig. 1: eine an einer Wand 9 montierte erfindungsgemässe Kabelverschraubung 1;
- Fig. 2a: die Kabelverschraubung 1 von Fig. 1 in einer ersten Ausgestaltung in Explosionsdarstellung;
- Fig. 2b: die Kabelverschraubung 1 von Fig. 2a mit einem Viertelschnitt in einer Explosionsdarstellung;
- Fig. 3: eine erfindungsgemässe Kabelverschraubung 1 in einer zweiten Ausgestaltung mit einem Viertelschnitt in partieller Explosionsdarstellung;
- Fig. 4: eine Seitenansicht mit einem Viertelschnitt durch die erfindungsgemässe Kabelverschraubung 1 aus Fig. 3, die an einer Montageöffnung 90 in einer Montagewand 9 angebracht ist und mittels eines Montagerings 6 gegen die Montagewand 9 gezogen wird mit einem schematisch dargestellten durchgeführten Kabel 8; und
- Fig. 5: ein vorzugsweise ausgestaltetes zweiteiliges, optional dreiteiliges Dichtungsteil 3.

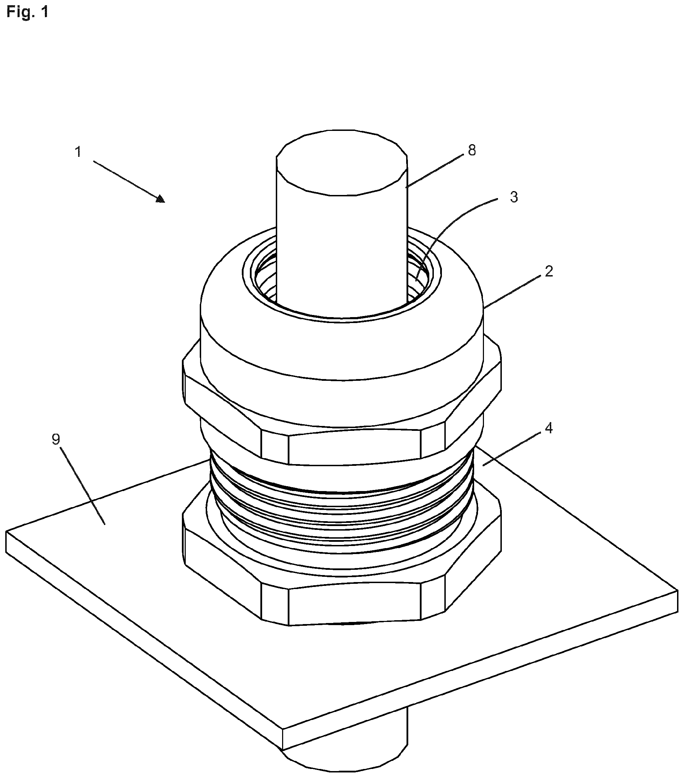

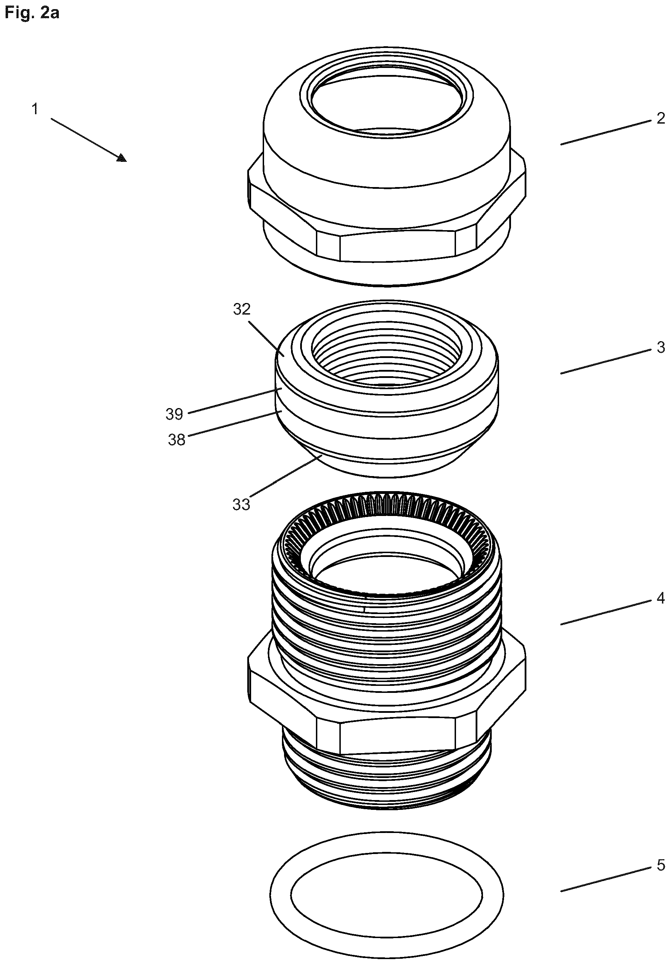

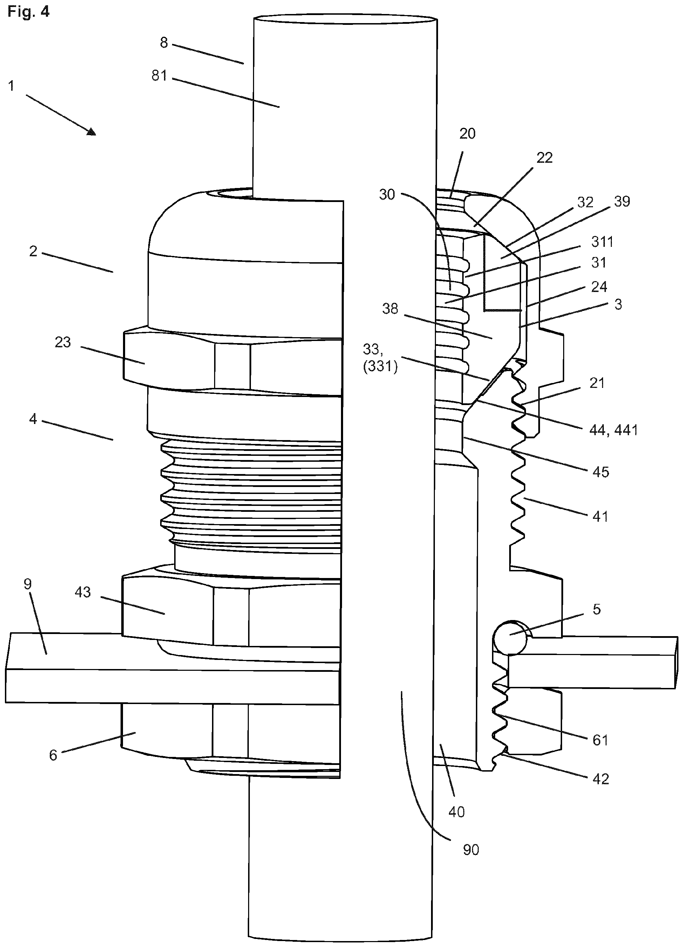

Fig. 1 zeigt eine an einer Wand 9 montierte erfindungsgemässe Kabelverschraubung 1 mit einer Hutmutter 2, einem Dichtungsteil 3, einem Montagestutzen 4 und einem Dichtungsring 5 (siehe auch die Figuren 2a und 4).

Fig. 2a zeigt die Kabelverschraubung 1 von Fig. 1 in einer Explosionsdarstellung mit der Hutmutter 2, dem Dichtungsteil 3, dem Montagestutzen 4 und dem Dichtungsring 5 in koaxialer Ausrichtung zueinander. Erfindungsgemäss weist das Dichtungsteil 3 zwei Teile 38, 39 auf.

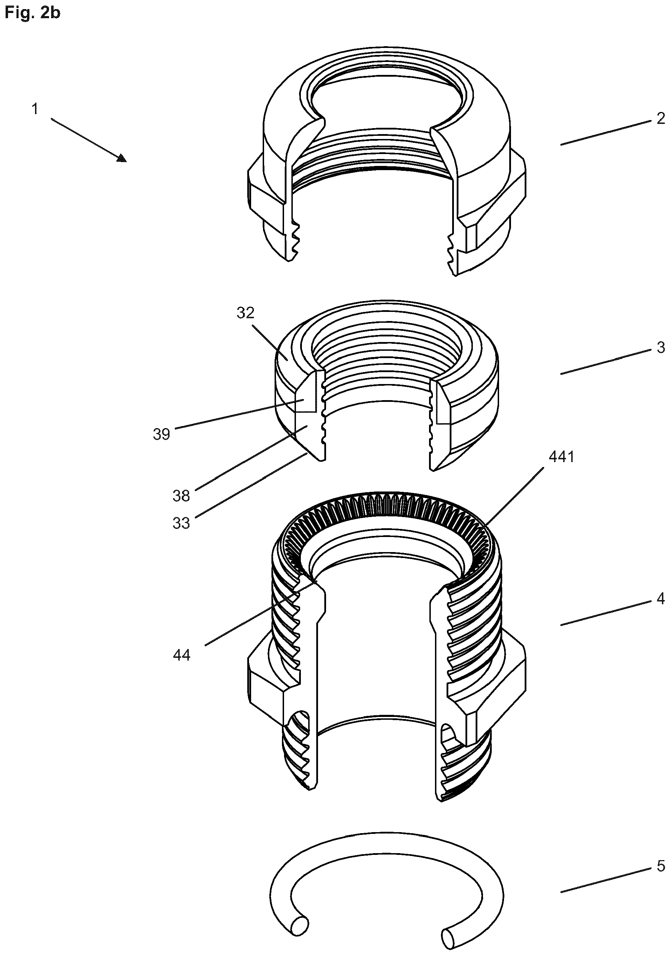

Fig. 2b zeigt die Kabelverschraubung 1 von Fig. 2a mit einem Viertelschnitt, der einen Einblick in die genannten Teile gewährt. Es ist gezeigt, dass das Dichtungsteil 3 auf der Unterseite eine erste konisch verlaufende Druckfläche 33 aufweist, die zu einer konisch verlaufenden Abstützfläche 441 an der Oberseite der Montagestutzens 4 korrespondiert. Auf der der ersten Druckfläche 33 gegenüberliegenden Seite des Dichtungsteils 3 ist eine zweite Druckfläche 32 vorgesehen, die vorzugsweise konisch ausgebildet ist und die an eine konische Innenfläche 22 der Hutmutter 2 angepasst ist.

Das Dichtungsteil 3 umfasst einen mit der ersten Druckfläche 33 versehenen Dichtabschnitt 38 und einen mit der zweiten Druckfläche 32 versehenen Beaufschlagabschnitt 39. Die Abstützfläche 441 ist mit Strukturelementen 441 versehen, die ausgehend von einem zentralen Punkt radial oder strahlenförmig nach aussen verlaufen und mittels denen die erste Druckfläche 33 entsprechend deformiert wird, sobald das Dichtungselement 3 gegen den Montagestutzen 4 gepresst wird. Dabei resultieren in der ersten Druckfläche 33 Formelemente, die zu den Strukturelementen 441 der Abstützfläche 441 korrespondieren.

Fig. 2b zeigt, dass der Beaufschlagabschnitt 39 den Dichtabschnitt 38 ringförmig umschliesst und ein sprechendes Ringsegment des Dichtabschnitts 38 ersetzt. Der Dichtabschnitt 38 und der Beaufschlagabschnitt 39 sind vorzugsweise miteinander verklebt oder verschweisst. Weitere optionale Verwendungsmöglichkeiten wurden genannt und werden nachstehend ergänzend beschrieben.

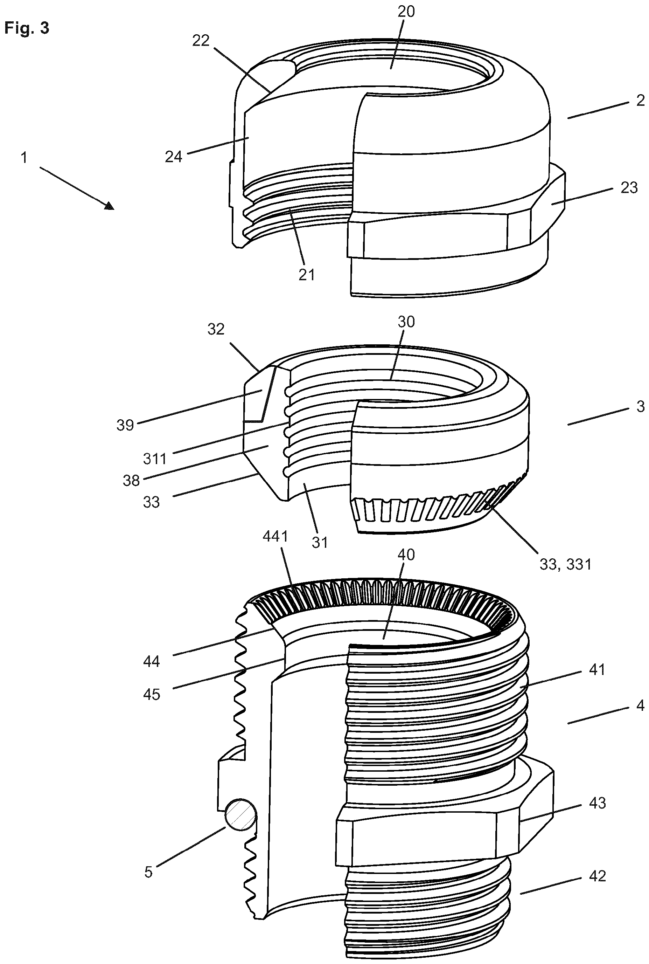

Fig. 3 zeigt eine erfindungsgemässe Kabelverschraubung 1 in einer bevorzugten Ausgestaltung mit einem Viertelschnitt, der Einblick in das Innere der Kabelverschraubung 1 gewährt. Die Hutmutter 2 und das Dichtungsteil 3 sind im unverschraubten Zustand gezeigt. Die Kabelverschraubung 1 umfasst wiederum einen Montagestutzen 4, einen Dichtungsring 5, ein Dichtungsteil 3 sowie eine Hutmutter 2. Der Montagestutzen 4 umfasst ein erstes Aussengewinde 41, auf das die Hutmutter 2 aufschraubbar ist. Auf der gegenüberliegenden Seite weist der Montagestutzen 4 ein zweites Aussengewinde 42 auf, welches dazu dient, die Kabelverschraubung 1 an einer Montagewand 9 festzuschrauben. An der Aussenseite des Montagestutzens 4 ist eine Schlüsselfläche 43 angeformt, an die ein Werkzeug, insbesondere ein Schraubenschlüssel, formschlüssig anlegbar ist. Zur Durchführung eines Kabels 8 weist der Montagestutzen 4 einen durchgehenden Stutzenkanal 40 auf. Am vom zweiten Aussengewinde 42 abgewandten Ende des Montagestutzens 4 geht die Innenfläche 45 in eine geneigte Abstützfläche 44 über. Auf der Abstützfläche 44 sind Strukturelemente 441 angeordnet.

Auf der Abstützfläche 44 kann das Dichtungsteil 3 mit der ersten Druckfläche 33 abgestützt werden. In dieser Ausgestaltung sind an der ersten Druckfläche 33 des Dichtungsteils 3 mehrere Formelemente 331, z.B. Einformungen oder Ausformungen vorzugsweise in gleichem Abstand angeordnet. Die Formelemente 331 sind vorzugsweise derart ausgebildet, dass sie zu den Strukturelementen 441 an der Abstützfläche 44 komplementär sind. Vorzugsweise sind die Formelemente 331 und/oder die Strukturelemente 441 radial oder strahlenförmig verlaufend vorzugsweise je zu einem gemeinsamen Schnittpunkt ausgerichtet.

Das Dichtungsteil 3 ist durch zwei form- oder stoffschlüssig miteinander verbundene Elemente, dem Beaufschlagabschnitt 39 und dem Dichtabschnitt 38 geformt, die in dieser Ausgestaltung entlang einer horizontalen und einer konisch verlaufenden Fläche aneinander anliegen.

Das Dichtungsteil 3 weist einen durchgehenden Aufnahmekanal 30, zur Durchführung eines Kabels 8, auf. Der Aufnahmekanal 30 ist durch die Innenfläche 31 des Dichtungsteils 3 begrenzt. An der Innenfläche 31 sind vorzugsweise eines oder mehrere Anpresselemente 311 angeordnet. Die Anpresselemente 311 sind vorzugsweise als Einformungen oder Ausformungen auf der Innenfläche 31 vorgesehen. Fig. 3 zeigt, dass innerhalb des Aufnahmekanals 30 fünf ringförmige Anpresselemente 311 vorgesehen sind.

Auf der der ersten Druckfläche 33 gegenüberliegenden Seite des Dichtungsteils 3 ist eine zweite Druckfläche 32 vorgesehen, die vorzugsweise konisch ausgebildet ist. Die zweite Druckfläche 32 ist Bestandteil des Beaufschlagabschnitts 39 und durch die konische Innenfläche 22 der Hutmutter 2 mechanisch beaufschlagbar. Die Hutmutter 2 ist durch ein Innengewinde 21 mit dem Aussengewinde 41 des Montagestutzens verbindbar. An einer Schlüsselfläche 23 der Hutmutter 2 ist ein Werkzeug, insbesondere ein Schraubenschlüssel, anlegbar, damit die Kabelverschraubung 1 verschraubt und fixiert werden kann. Die Hutmutter 2 weist eine durchgehende Durchgangsöffnung 20 auf, welche zumindest teilweise durch die Innenfläche 24 der Hutmutter 2 begrenzt ist. Die Innenfläche 24 geht vorzugweise unterbruchsfrei in die konische Innenfläche 22 über.

Fig. 4 zeigt die in einer Montageöffnung 90 der Montagewand 9 installierte Kabelverschraubung 1 von Fig. 1 in der Ausgestaltung von Fig. 3 mit einem durchgeführten Kabel 8 mit einem Viertelschnitt. Das Kabel 8 mit der Kabelaussenfläche 81 ist durch die Durchführungsöffnung 20 der Hutmutter 2, den Aufnahmekanal 30 des Dichtungsteils 3 und den Stutzenkanal 40 des Montagestutzens 4 durchgeführt. Die Kabelverschraubung 1 ist mittels eines Montagerings 6, dessen Innengewinde 61 auf das zweite Aussengewinde 42 aufgeschraubt ist, mechanisch stabil an der Montagewand 9 gehalten. Durch den Montagering 6 wird der Dichtungsring 5 gegen die Montagewand 9 gepresst, so dass eine gas- und flüssigkeitsdichte Abdichtung geformt wird. Die Hutmutter 2 ist mit ihrem Innengewinde 21 mit dem Aussengewinde 42 des Montagestutzens 4 verbunden und drückt mit der konischen Innenfläche 22 gegen die zweite Druckfläche 32 am Beaufschlagabschnitt 39 des Dichtungsteils 3. Dadurch wird die vorzugsweise mit Formelementen 331 versehene erste Druckfläche 33 des Dichtabschnitt 38 des Dichtungsteils 3 gegen die mit Strukturelementen 441 versehene Abstützfläche 44 des Montagestutzens 4 gedrückt, sodass die Formelemente 331 und die Strukturelemente 441 ineinander eingreifen können bzw. die Strukturelemente 441 der Abstützfläche 44 in die erste Druckfläche 33 eindringen und dort entsprechende Formelemente 331 einformen können. In beiden Fällen sind das Dichtungsteil 3 und der Montagestutzen 4 formschlüssig miteinander verbunden und drehfest gegeneinander gehalten.

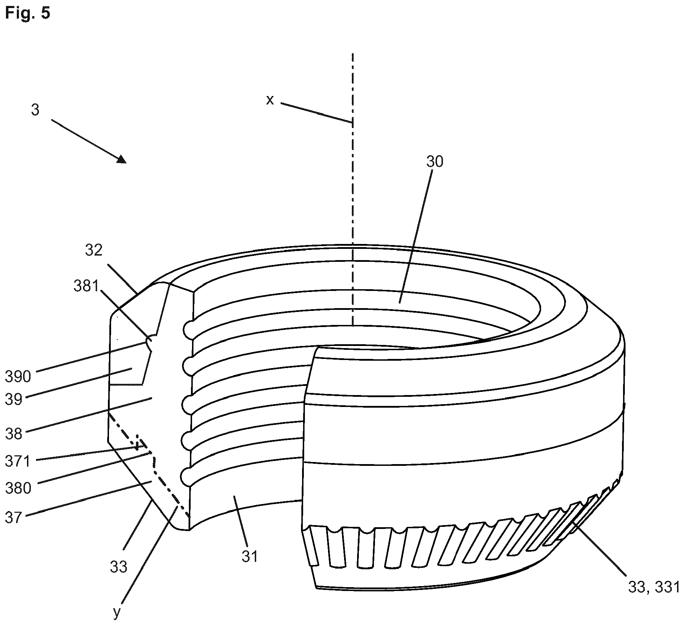

Fig. 5 zeigt ein vorzugsweise ausgestaltetes zweiteiliges, optional dreiteiliges Dichtungsteil 3, das einen Dichtabschnitt 38 und einen Beaufschlagabschnitt 39 aufweist, die durch Formelemente 381, 390 miteinander verbunden sind. Die Formelemente 381, 390 greifen formschlüssig ineinander ein und sind vorzugsweise als Rastelemente ausgebildet. Exemplarisch ist gezeigt, dass das am Dichtabschnitt 38 vorgesehene Formteil 381 ein Ring ist, der in eine Ringnut 390 eingreift, die als Formteil am Beaufschlagabschnitt 39 vorgesehen ist. Die Formelemente 381, 390 verlaufen in einer Ebene, die senkrecht zur Längsachse x der Kabelverschraubung 1 steht.

Durch eine Trennlinie y ist gezeigt, dass an der Unterseite des Dichtabschnitts 38 optional ein zweiter Beaufschlagabschnitt 37 vorteilhaft vorgesehen sein kann. Der Dichtabschnitt 38 und der zweite Beaufschlagabschnitt 37 sind ebenfalls durch Formelemente 371, 380, einer Ringnut und einem Ring, miteinander verbunden. Alternativ können der Dichtabschnitt 38 und der erste Beaufschlagabschnitt 39 und/oder der Dichtabschnitt 38 und der zweite Beaufschlagabschnitt 37 auch miteinander verklebt oder anderweitig miteinander verbunden werden. Das Dichtungsteil 3 kann daher auch drei- oder mehrteilig ausgebildet sein.

Die Formelemente 371, 380; 381, 390 sind vorzugsweise einstückig am Dichtabschnitt 38 bzw. am ersten und/oder zweiten Beaufschlagabschnitt 37, 39 angeformt, angeklebt oder formschlüssig eingesetzt bzw. verankert.

Jedes Element 37, 38, 39 des Dichtungsteils 3 ist für seine oben beschriebene Funktion optimiert, sodass eine optimale Kabelverschraubung 1 realisiert werden kann.

### Bezugszeichenliste

- 1: Kabelverschraubung
- 2: Hutmutter
- 20: Durchführungsöffnung
- 21: Innengewinde
- 22: konische Innenfläche
- 23: Schlüsselfläche
- 24: Innenfläche
- 3: Dichtungsteil
- 30: Aufnahmekanal
- 31: Innenfläche
- 311: Anpresselemente
- 32: zweite Druckfläche
- 33: erste Druckfläche
- 331: Formelemente
- 37: zweiter Beaufschlagabschnitt
- 38: Dichtabschnitt
- 381: Formelement, Verbindungselement, Rastelement
- 39: erster Beaufschlagabschnitt
- 390: Formelement, Verbindungselement, Rastelement
- 4: Montagestutzen
- 40: Stutzenkanal
- 41: erstes Aussengewinde
- 42: zweites Aussengewinde
- 43: Schlüsselfläche
- 44: Abstützfläche
- 441: Strukturelemente
- 45: Innenfläche
- 5: Dichtungsring
- 6: Montagering
- 61: Innengewinde
- 8: Kabel
- 81: Kabelaussenfläche
- 9: Montagewand
- 90: Montageöffnung

## Patentansprüche

1. Kabelverschraubung (1) zur Durchführung eines Kabels (8) durch eine Montageöffnung (90) in einer Montagewand (9), insbesondere einer Gehäusewand eines elektrischen Geräts oder eines elektrischen Schranks, mit einem hohlzylinderförmigen Montagestutzen (4),
- der einen der Durchführung des Kabels (8) dienenden Stutzenkanal (40) umfasst,
- der vorzugsweise eine Schlüsselfläche (43) zum Anlegen eines Werkzeugs umfasst,
- der wenigstens ein erstes Aussengewinde (41) aufweist, mittels dessen eine Hutmutter (2), die eine der Durchführung des Kabels dienende Durchführungsöffnung (20) aufweist, gehalten ist, und
- der in dem der Hutmutter (2) zugewandten Endbereich eine vorzugsweise konische Abstützfläche (44) aufweist, an der eine erste Druckfläche (33) eines Dichtungsteils (3) anliegt, das einen zur Durchführung des Kabels (8) dienenden Aufnahmekanal (30) aufweist und das eine der Hutmutter (2) zugewandte zweite Druckfläche (33) aufweist,
**dadurch gekennzeichnet, dass** das Dichtungsteil (3) einen Dichtabschnitt (38) und wenigstens einen ersten Beaufschlagabschnitt (39) aufweist, wobei der Dichtabschnitt (38) und der wenigstens eine Beaufschlagabschnitt (39) aus unterschiedlichen Materialien gefertigt sind.

2. Kabelverschraubung (1) nach Anspruch 1, **dadurch gekennzeichnet, dass** ein erster Beaufschlagabschnitt (39) an einem Ende der Hutmutter (2) zugewandten Ende des Dichtabschnitts (38) anliegt und dass ein zweiter Beaufschlagabschnitt (37), der aus einem anderen Material gefertigt ist als der Dichtabschnitt (38), an einem dem Stutzenkanal (40) zugewandten Ende des Dichtabschnitts (38) anliegt und dass der erste und/oder zweite Beaufschlagabschnitt (37; 39) zumindest teilweise formschlüssig am Dichtabschnitt (38) anliegen.

3. Kabelverschraubung (1) nach Anspruch 1 oder 2, **dadurch gekennzeichnet, dass** der Montagestutzen (4) ein zweites Aussengewinde (42) aufweist, mit welchem die Kabelverschraubung (1) an einer Montagewand (9), gegebenenfalls mit einem Montagering (6) festschraubbar ist und/oder dass am Montagestutzen (4) Schnellverriegelungselemente, insbesondere Schnappelemente, zur Festlegung der Kabelverschraubung (1) an einer Montagewand (9), angeordnet sind.

4. Kabelverschraubung (1) nach Anspruch 1, 2 oder 3, **dadurch gekennzeichnet, dass** das Dichtungsteil (3) mit dem Dichtabschnitt (38) und dem ersten und/oder dem zweiten Beaufschlagabschnitt (39; 37) durch Mehrkomponenten-Spritzgiessen und/oder durch Verpressen hergestellt ist oder dass der Dichtabschnitt (38) und/oder der erste und/oder zweite Beaufschlagabschnitt (39; 37) durch Spritzgiessen und/oder durch Verpressen separat hergestellt sind.

5. Kabelverschraubung (1) nach einen der Ansprüche 1-4, **dadurch gekennzeichnet,**
a) **dass** der Dichtabschnitt (38) und der erste und/oder zweite Beaufschlagabschnitt (39; 37) durch Verleimen miteinander verbunden sind; oder
b) **dass** der Dichtabschnitt (38) und der erste und/oder zweite Beaufschlagabschnitt (39; 37) stoffschlüssig miteinander verbunden sind; oder
c) **dass** der Dichtabschnitt (38) und der erste und/oder zweite Beaufschlagabschnitt (39; 37) zueinander korrespondierende Gewindeelemente aufweisen und miteinander verschraubt sind; oder
d) **dass** der Dichtabschnitt (38) und der erste und/oder zweite Beaufschlagabschnitt (39; 37) zueinander korrespondierende Verbindungselemente, wie Rastelemente (381, 390), aufweisen und formschlüssig miteinander verbunden, gegebenenfalls miteinander verrastet sind.

6. Kabelverschraubung (1) nach einen der Ansprüche 1-5, **dadurch gekennzeichnet, dass** die Materialien für den Dichtabschnitt (38) und für den ersten und/oder zweiten Beaufschlagabschnitt (39; 37) unterschiedliche Materialhärten aufweisen.

7. Kabelverschraubung (1) nach einen der Ansprüche 1-6, **dadurch gekennzeichnet, dass** der Dichtabschnitt (38) und/oder der erste und/oder zweite Beaufschlagabschnitt (39; 37) aus Gummi, einem thermoplastischen Elastomer, Silikon oder einer Kombination hiervon gefertigt sind und dass der erste und/oder zweite Beaufschlagabschnitt (39; 37) eine höhere Materialhärte als der Dichtabschnitt (38) aufweist.

8. Kabelverschraubung (1) nach einen der Ansprüche 1-7, **dadurch gekennzeichnet, dass** die erste Druckfläche (33) am Dichtabschnitt (38) oder, sofern vorhanden am zweiten Beaufschlagabschnitt (37), und dass die zweite Druckfläche (32) am ersten Beaufschlagabschnitt (39) vorgesehen ist.

9. Kabelverschraubung (1) nach einem der Ansprüche 1-8, **dadurch gekennzeichnet, dass** die Innenfläche (31) des Dichtungsteils (3) bzw. des Dichtabschnitts (38) ein oder mehrere Anpresselemente (311) aufweist, die der Verbesserung der Anpressung der Innenfläche (31) gegen die Kabelaussenfläche (81) des Kabels (8) dienen und die Einformungen oder Ausformungen an der Innenfläche (31) bilden und vorzugsweise radial oder ringförmig verlaufen.

10. Kabelverschraubung (1) nach einem der Ansprüche 1-9, **dadurch gekennzeichnet, dass** das Volumen des Dichtabschnitts (38) grösser als das Volumen des ersten und/oder zweiten Beaufschlagabschnitts (39; 37) ist.

11. Kabelverschraubung (1) nach Anspruch 10, **dadurch gekennzeichnet, dass** das Volumen des ersten und/oder zweiten Beaufschlagabschnitts (39; 37) maximal 45%, vorzugsweise maximal 40% des Volumens des Dichtungsteils (3) darstellt.

12. Kabelverschraubung (1) nach einem der Ansprüche 1-11, **dadurch gekennzeichnet, dass** die Hutmutter (2) eine konische Innenfläche (22) aufweist, die geometrisch komplementär zur zweiten Druckfläche (32) des Dichtungsteils (3) bzw. des ersten Beaufschlagabschnitts (39) ausgestaltet ist.

13. Kabelverschraubung (1) nach Anspruch 12, **dadurch gekennzeichnet, dass** die konische Innenfläche (22) der Hutmutter (2) mit einer reibungsmindernden Beschichtung überzogen ist und/oder dass das Dichtungsteil (3) oder der erste und/oder zweite Beaufschlagabschnitt (37, 39) mit einer reibungsmindernden Beschichtung überzogen ist.

14. Kabelverschraubung (1) nach einem der Ansprüche 1-13, **dadurch gekennzeichnet, dass** das Dichtungsteil (3) bzw. der Dichtabschnitt (38) und der erste und/oder zweite Beaufschlagabschnitt (39; 37) mehrere, zumindest zwei, Aufnahmekanäle (30), zur Durchführung mehrerer Kabel (8), aufweisen.

15. Kabelverschraubung (1) nach einem der Ansprüche 1-14, **dadurch gekennzeichnet, dass** das die Aufnahmekanäle (30) unterschiedliche Durchmesser und Formen, zur Durchführung von Kabeln mit unterschiedlichem Durchmesser und unterschiedlicher Formen, aufweisen.
